# EUROPEAN PATENT APPLICATION

(11) **EP 4 726 111 A1**
(43) Date of publication of application: **15.04.2026**
(21) Application number: 25204526.5
(22) Date of filing: 25.09.2025
(51) Int. Cl.: E02F 3/32, E02F 9/08, E02F 9/20

(54) **WORK MACHINE**

(30) Priority: 10.10.2024 JP 2024178338
(71) Applicant: Yanmar Holdings Co., Ltd., Osaka-shi, Osaka (JP)
(72) Inventor: KITAHARA, Satoshi, Fukuoka (JP)
(74) Representative: Novagraaf International SA

(57) **Abstract**

[Problem] To suppress or prevent influence of vibration during operation of a work machine from being exerted on devices compactly arranged in an engine room.

[Solution] The work machine 100 includes a base plate 402, an electric motor 621, a hydraulic pump 701, a fan 31, and a base portion 5. The electric motor 621 is supported on the base plate 402. The hydraulic pump 701 is connected to a first side of the electric motor 621 in a first direction perpendicular to the up-down direction. The fan 31 is disposed above the hydraulic pump 701. The base portion 5 that is disposed on the base plate 402 across the hydraulic pump 701 supports the fan 31.

## Description

### TECHNICAL FIELD

The present invention relates to a work machine.

### BACKGROUND ART

Conventionally, a work machine that air-cools an inside of an engine room has been known. For example, in the electric excavator of Patent Document 1, a cooling fan disposed in a machine room (i.e., an engine room) covered with an exterior cover (so-called hood) is driven to take air into the machine room from a vent hole formed in a side portion of the exterior cover.

### PRIOR ART DOCUMENT

### PATENT DOCUMENT

Patent Document 1: Japanese Unexamined Patent Application Publication No. 2023-020294

### SUMMARY OF INVENTION

### TECHNICAL PROBLEM

However, in a work machine, such as a hydraulic excavator, a plurality of devices are required to be arranged in a limited internal space in consideration of vibration generated during work. In particular, a hydraulic pump feeds hydraulic oil in a pressurized manner to a hydraulic actuator that causes the work machine to operate. When the hydraulic pump is attached to an electric motor, a fan for cooling the electric motor by air is required to be disposed so as not to interfere with the hydraulic pump. Furthermore, arrangement of a heat exchanger and the like cooled by the fan is required to be considered similarly.

The present invention has been made in consideration of the above-described situation, and an object of the present invention is to suppress or prevent influence of vibration during operation of a work machine from being exerted on devices compactly arranged in an engine room.

### SOLUTION TO PROBLEM

To achieve the object described above, a work machine according to an aspect of the present invention includes a base plate, an electric motor, a hydraulic pump, a fan, and a base portion. The base plate extends perpendicularly to an up-down direction. The electric motor is supported on the base plate. The hydraulic pump is connected to a first side of the electric motor in a first direction perpendicular to the up-down direction. The fan is disposed above the hydraulic pump. The base portion is disposed on the base plate across the hydraulic pump and supports the fan.

Further features and advantages of the present invention will become clearer from the following embodiment.

### ADVANTAGEOUS EFFECTS OF INVENTION

According to the present invention, it is possible to suppress or prevent influence of vibration during operation of a work machine from affecting devices compactly arranged in an engine room.

### BRIEF DESCRIPTION OF DRAWINGS

FIG. 1 is a side view schematically illustrating an example of a configuration of a hydraulic excavator according to an embodiment.
FIG. 2 is a block diagram schematically illustrating a configuration of an electrical system and a hydraulic system of the hydraulic excavator.
FIG. 3 is a horizontal cross-sectional view illustrating a configuration of an interior of an engine room of the hydraulic excavator.
FIG. 4 is a perspective view illustrating an arrangement example of a fan, a base portion, an electric motor, a hydraulic pump, and the like with respect to a swivel frame.
FIG. 5 is a front view illustrating an arrangement example of leg portions of the base portion and an anti-vibration support member as viewed from a right side.

### DESCRIPTION OF EMBODIMENTS

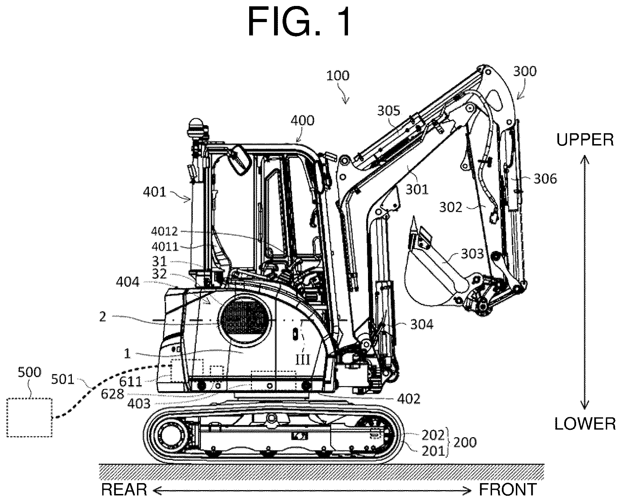

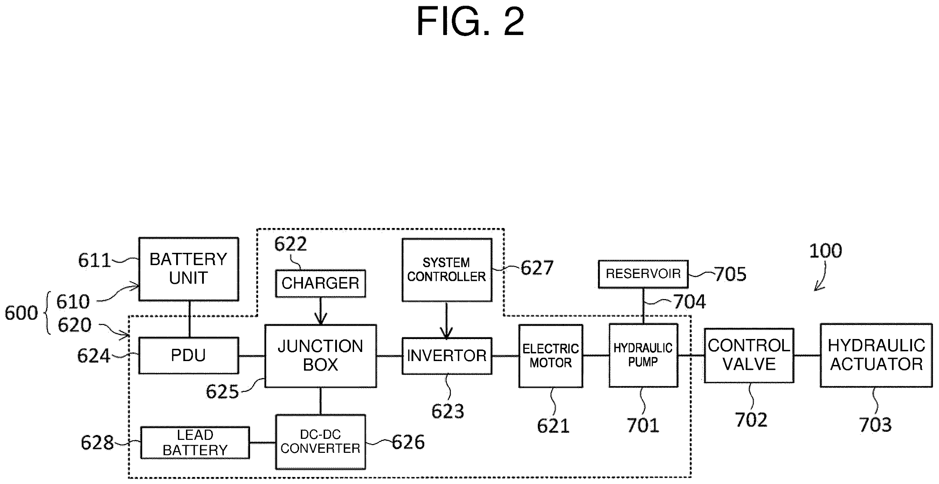

An embodiment of the present invention will be described below with reference to the drawings. FIG. 1 is a side view schematically illustrating an example of a configuration of a hydraulic excavator 100 according to the embodiment. FIG. 2 is a block diagram schematically illustrating a configuration of an electrical system and a hydraulic system of the hydraulic excavator 100. The hydraulic excavator 100 is an example of the "work machine" of the present invention.

### 1. Hydraulic Excavator 100

The hydraulic excavator 100 includes a lower traveling body 200, a work machine 300, and an upper swiveling body 400. In this embodiment, the upper swiveling body 400 (particularly, an engine room 404 described below) may be generically referred to as a "machine body".

Note that directions in the present disclosure are defined as follows. First, in the upper swiveling body 400, a direction from one of a front side and a rear side of a driver's seat 4011, which will be described below, on which an operator (pilot or driver) is seated toward the other is referred to as a "front-rear direction". In the "front-rear direction", a direction from the rear side to the front side of the driver's seat 4011 is referred to as "front", and a direction from the front side to the rear side of the driver's seat 4011 is referred to as "rear". Therefore, in a non-swiveling state of the upper swiveling body 400 (swiveling angle is zero degree) relative to the lower traveling body 200, the front-rear direction of the upper swiveling body 400 coincides with a direction in which the lower traveling body 200 moves forward and rearward. Note that the front-rear direction is an example of a "second direction" of the present invention. Furthermore, a term "front" is an example of a "first side in the second direction" of the present invention, and a term "rear" is an example of a "second side in the second direction" of the present invention.

Furthermore, in a state where the front is viewed from the rear side, a direction from one of the left side and the right side of the driver's seat 4011 toward the other is referred to as a "left-right direction". In the left-right direction, a direction toward the left side of the driver's seat 4011 is referred to as "left", and a direction toward the right side of the driver's seat 4011 is referred to as "right". Note that the left-right direction is an example of the "first direction" of the present invention. Furthermore, a term "right" is an example of a "first side in the first direction" of the present invention, and a term "left" is an example of a "second side in the first direction" of the present invention.

A direction from one of the lower traveling body 200 and the upper swiveling body 400 toward the other is referred to as an "up-down direction". In the up-down direction, a direction from the lower traveling body 200 toward the upper swiveling body 400 is referred to as "upper", and a direction from the upper swiveling body 400 toward the lower traveling body 200 is referred to as "lower". Therefore, when the hydraulic excavator 100 is disposed on a horizontal plane having a vertical direction as a normal direction, the up-down direction of the hydraulic excavator 100 coincides with the vertical direction. Furthermore, an upper side corresponds to a vertically upper side, and a lower side corresponds to a vertically lower side. The front-rear direction, the left-right direction, and the up-down direction are perpendicular to each other.

These directions are names used merely for the description and are not intended to limit actual positional relationships or directions.

### 1-1. Lower Traveling Body 200

The lower traveling body 200 includes a pair of left and right crawlers 201 and a pair of left and right traveling motors 202. The individual traveling motors 202 are hydraulic motors. The left and right traveling motors 202 drive the left and right crawlers 201, respectively, to move the hydraulic excavator 100 forward and rearward.

### 1-2. Work Machine 300

The work machine 300 includes a boom 301, an arm 302, and a bucket 303. The boom 301, the arm 302, and the bucket 303 can be independently driven, thereby enabling to perform excavation work of earth, sand, and the like. The boom 301 pivots by means of a boom cylinder 304. The boom cylinder 304 has a base end portion supported by a front portion of the upper swiveling body 400, and is freely movable in an extendable and retractable manner. The arm 302 pivots by means of an arm cylinder 305. The arm cylinder 305 has a base end portion supported by the boom 301, and is freely movable in an extendable and retractable manner. The bucket 303 pivots by means of a bucket cylinder 306. The bucket cylinder 306 has a base end portion supported by the arm 302, and is freely movable in an extendable and retractable manner. Each of the boom cylinder 304, the arm cylinder 305, and the bucket cylinder 306 are constituted of a hydraulic cylinder.

### 1-3. Upper Swiveling Body 400

The upper swiveling body 400 is positioned over the lower traveling body 200, and is disposed in a swivel available manner via a swivel bearing (not illustrated) relative to the lower traveling body 200. The upper swiveling body 400 includes an operation section 401, a swivel frame 402, a swivel motor 403, and an engine room 404. The swivel frame 402 is an example of a "base plate" of the present invention and has a plate shape extending perpendicularly to the up-down direction. The operation section 401, the swivel motor 403, various devices mounted in the engine room 404, and the like are mounted on the swivel frame 402. By driving of the swivel motor 403 that is a hydraulic motor, the upper swiveling body 400 swivels via the swivel bearing.

A hydraulic pump 701 (see FIG. 2) is disposed in the upper swiveling body 400. The hydraulic pump 701 is driven by an electric motor 621 (see FIG. 2). The hydraulic pump 701 supplies hydraulic oil (pressure oil) to hydraulic motors (for example, the left and right traveling motors 202 and the swivel motor 403), and hydraulic cylinders (for example, the boom cylinder 304, the arm cylinder 305, and the bucket cylinder 306). The hydraulic motors and the hydraulic cylinders that are driven with hydraulic oil supplied from the hydraulic pump 701 are collectively referred to as hydraulic actuators 703 (see FIG. 2).

The driver's seat 4011 is disposed in the operation section 401. Various levers 4012 are arranged around the driver's seat 4011. The operator is seated on the driver's seat 4011 and operates the levers 4012, thereby driving the hydraulic actuator 703. This allows the lower traveling body 200 to travel, the work machine 300 to excavate, the upper swiveling body 400 to swivel, and the like.

A battery unit 611 is disposed in the upper swiveling body 400. The battery unit 611 is composed of, for example, a lithium-ion battery unit, and stores electric power for driving the electric motor 621. The battery unit 611 may be composed of a plurality of batteries as a unit, or may be composed of a single battery cell.

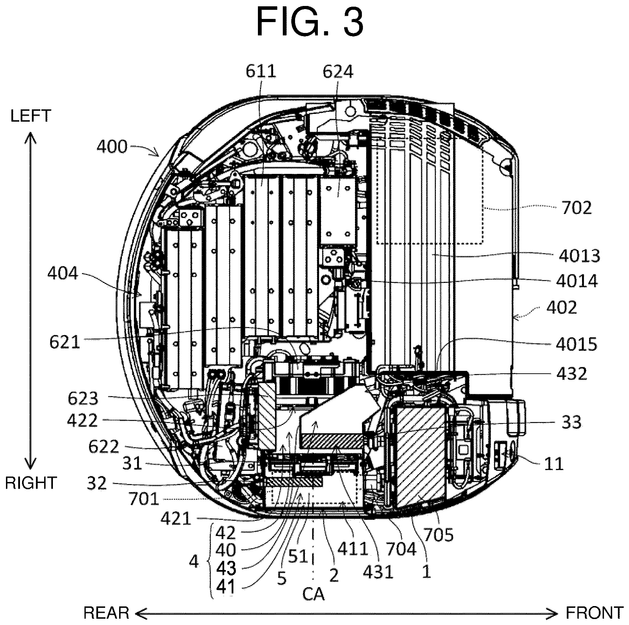

The battery unit 611 is disposed on the swivel frame 402 (see FIG. 3 described below). Furthermore, in this embodiment, the battery unit 611 is preferably disposed on the left side of the electric motor 621 (that is, on a side opposite to the hydraulic pump 701). Thus, the battery unit 611 may be arranged in a free layout without interfering with a fan 31, the electric motor 621, heat exchangers 32 and 33, and the like, which will be described below. Furthermore, a loading amount (that is, a power storage amount) of the battery unit 611 can be further increased.

The upper swiveling body 400 further includes a lead battery 628. The lead battery 628 outputs a low direct-current voltage (e.g., 12 V). The output from the lead battery 628 is supplied, as a control voltage, to, for example, a system controller 627 (see FIG. 2), a drive portion of the fan 31, and so on.

The upper swiveling body 400 has a power supply port which is not illustrated. The power supply port and a commercial power source 500, which is an external power source, are connected to each other via a power supply cable 501. Thus, the hydraulic excavator 100 can charge the battery unit 611 and the lead battery 628.

The hydraulic excavator 100 may be so configured as to be a combination of a hydraulic device, such as the hydraulic actuators 703, and an actuator driven by electric power. Examples of the actuator driven by electric power include an electric traveling motor, an electric cylinder, and an electric swivel motor.

### 1-4. Configuration of Electrical System and Hydraulic System

The hydraulic excavator 100 includes a plurality of electric devices 600. The plurality of electric devices 600 include a refrigerant cooling device 610 that is cooled by heat exchange with a refrigerant, and an air cooling device 620 that is cooled by an airflow. In this embodiment, the refrigerant cooling device 610 includes, for example, the battery unit 611. The refrigerant is water for cooling in this embodiment, but is not limited to this example, and may be a liquid other than water, or may be a gas for cooling, such as a non-fluorocarbon gas. The air cooling device 620 includes, for example, the electric motor 621, a charger 622, an inverter 623, a power drive unit (PDU) 624, a junction box 625, a DC-DC converter 626, the system controller 627, and the lead battery 628. The above-described electric devices 600 are housed in the engine room 404.

The electric motor 621 is composed of a permanent magnet motor or an induction motor, and is driven by electric power supplied from the battery unit 611 via the junction box 625 and the inverter 623. The electric motor 621 is housed in the engine room 404 and supported on the swivel frame 402 via anti-vibration support members 6211. That is, the hydraulic excavator 100 further includes the anti-vibration support members 6211. The anti-vibration support members 6211 are disposed on both sides of the electric motor 621 in the front-rear direction on the swivel frame 402 and support the electric motor 621. Note that the number of the anti-vibration support members 6211 is three in this embodiment, but is not limited to this example, and may be a plurality of members other than three, or may be a single member.

The hydraulic pump 701 is housed in the engine room 404 and is connected to the right side of the electric motor 621. When described in detail, an output shaft (not illustrated) of the electric motor 621 extends rightward from a right end portion of the electric motor 621. The hydraulic pump 701 is connected to the output shaft of the electric motor 621. The hydraulic pump 701 may be a variable capacity pump or a fixed capacity pump. Furthermore, in this embodiment, the number of hydraulic pumps 701 is one. However, the number of hydraulic pumps 701 is not limited to this example, and a plurality of hydraulic pumps 701 may be provided.

The hydraulic pump 701 is connected to a reservoir 705 via a hydraulic hose 704. The reservoir 705 is a hydraulic oil tank that contains (stores) hydraulic oil. When the hydraulic pump 701 is driven by the electric motor 621, hydraulic oil in the reservoir 705 is supplied to the hydraulic actuator 703 via the control valve 702. Thus, the hydraulic actuator 703 is driven. The control valve 702 is a direction switching valve that controls a flow direction and a flow rate of hydraulic oil to be supplied to the hydraulic actuator 703. As described above, the hydraulic excavator 100 includes the hydraulic pump 701 that is driven by any one of the plurality of electric devices 600 (for example, the electric motor 621) and discharges the hydraulic oil.

The charger 622 is also referred to as a power feeder, and converts an AC voltage supplied from the commercial power source 500 (refer to FIG. 1) via the power supply cable 501 into a DC voltage. The inverter 623 converts a DC voltage supplied from the battery unit 611 into an AC voltage and supplies the AC voltage to the electric motor 621. The electric motor 621 is thus rotated. The supply of the AC voltage (current) from the inverter 623 to the electric motor 621 is performed based on a rotation command output from the system controller 627.

The PDU 624 is a battery control unit that controls an internal battery relay to control input and output of the battery unit 611.

The junction box 625 includes a charger relay, an inverter relay, and fuses. A voltage output from the above-mentioned charger 622 is supplied to the battery unit 611 via the junction box 625 and the PDU 624. The voltage output from the battery units 611 is supplied to the inverters 623 via the junction box 625 and the PDU 624.

The DC-DC converter 626 converts a high DC voltage (e.g., 300 V) supplied from the battery unit 611 via the junction box 625 to a low DC voltage (e.g., 12 V). The voltage output from the DC-DC converter 626 is supplied to the system controller 627, the drive portion of the fan 31, and the like, similarly to an output from the lead battery 628.

The system controller 627 is composed of an electronic control unit (ECU), and electrically controls the individual sections of the hydraulic excavator 100.

### 1-5. Internal Configuration of Engine Room 404

FIG. 3 is a cross-sectional view illustrating an internal configuration of the engine room 404 of the hydraulic excavator 100. Note that FIG. 3 illustrates a cross-sectional structure of the engine room 404 virtually cut along a plane that includes a two-dot chain line III-III in FIG. 1 and is perpendicular to the up-down direction.

The hydraulic excavator 100 further includes a hood 1, a ventilation portion 2, the fan 31, a radiator 32, an oil cooler 33, a duct 4, and the base portion 5. The fan 31, the radiator 32, the oil cooler 33, the duct 4, and the base portion 5 are housed in the engine room 404, as illustrated in FIG. 3.

The hood 1 is a housing that covers the engine room 404 together with a step 4013 and side wall portions 4014 and 4015 of the operation section 401, the swivel frame 402, and the like. In other words, the hood 1 is an outer wall of the engine room 404. The hood 1 has an exhaust port 11. The exhaust port 11 is an opening portion formed in a portion of the hood 1 on the front side and the right side, and connects the inside and the outside of the engine room 404. In this embodiment, a portion of the outside air taken into the engine room 404 from the ventilation portion 2 through the duct 4 is discharged to the outside from the exhaust port 11.

The ventilation portion 2 is formed in the hood 1 and connects the inside and the outside of the engine room 404 in a ventilation available manner. A rotation of the fan 31 causes the outside air to be taken into the engine room 404 from the ventilation portion 2. In this embodiment, the ventilation portion 2 is formed in a right side portion of the hood 1. However, this example does not exclude a configuration in which the ventilation portion 2 is formed at a position other than the right side portion of the hood 1.

The fan 31 is disposed above the electric motor 621 and the hydraulic pump 701 in the engine room 404 and takes in the outside air via the ventilation portion 2. The fan 31 is supported inside the duct 4 so as to be rotatable about a rotation axis CA extending in the left-right direction. The fan 31 of this embodiment is of a suction type. Therefore, when the fan 31 is rotated, the outside air passing through the ventilation portion 2 is sucked into the duct 4 and flows into the engine room 404.

The radiator 32 is an example of a "first heat exchanger" of the present invention, is disposed between the ventilation portion 2 and the fan 31 in the duct 4, and cools a refrigerant by heat exchange with the outside air (air) taken in by the ventilation portion 2. The refrigerant to be cooled is for the electric devices 600 in the engine room 404. For example, the refrigerant is supplied from the radiator 32 to the refrigerant cooling device 610, such as the battery unit 611, to cool the refrigerant cooling device 610.

The oil cooler 33 is an example of a "second heat exchanger" of the present invention, and is connected to an oil passage through which the hydraulic oil circulates via the hydraulic pump 701, the hydraulic actuator 703 (see FIG. 2), and the like. The oil cooler 33 cools the hydraulic oil that is circulated by the hydraulic pump 701 in the oil passage by heat exchange with the outside air (air) taken in by the ventilation portion 2.

The duct 4 is a flow passage portion through which the outside air taken in by the ventilation portion 2 flows. The duct 4 has a frame shape whose both ends in the left-right direction are open, and extends in the left-right direction. One end of the duct 4 is disposed on the upstream of the fan 31 in the flow of the outside air and opens toward the ventilation portion 2. The one end of the duct 4 (one end 411 of a first flow passage portion 41 described below) is an example of an "upstream opening portion" of the present invention, and is connected to the ventilation portion 2. The other ends of the duct 4 (for example, a second opening portion 422 and a fourth opening portion 432 described below) open into the engine room 404. The fan 31, the radiator 32, and the oil cooler 33 are disposed in the duct 4. Specifically, these are disposed in the middle of the flow passage portion of the outside air in the duct 4. The inverter 623 and the like are attached to a portion (for example, a second flow passage portion 42 to be described below) of the duct 4 on the left side (that is, the downstream of the outside air) of the fan 31. A portion of the electric motor 621 and the hydraulic pump 701 are disposed below the duct 4. In addition, as illustrated in FIG. 3, the charger 622 is disposed on the rear side of the duct 4 and the hydraulic pump 701.

The base portion 5 is housed in the engine room 404, is disposed on the swivel frame 402 across the hydraulic pump 701, and supports the fan 31. According to the hydraulic excavator 100 of this embodiment, the fan 31 is supported by the base portion 5 straddling the hydraulic pump 701 connected to the electric motor 621 above the hydraulic pump 701. Therefore, the fans 31 can be stably disposed in a state of being separated from and in parallel to the swivel frame 402 and the hydraulic pump 701 in the up-down direction. Therefore, the hydraulic excavator 100 can suppress or prevent influence of vibration during operation from being exerted on the devices (particularly, the fan 31) compactly arranged in the engine room 404.

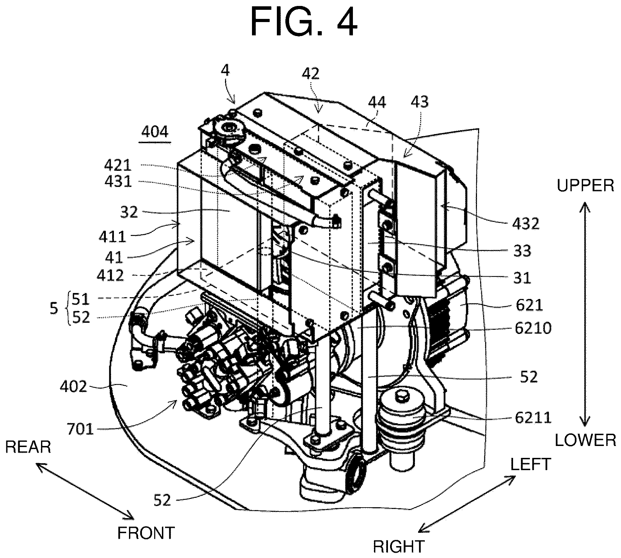

Furthermore, the base portion 5 preferably supports at least one of the heat exchangers, that is, the radiator 32 and the oil cooler 33. In this embodiment, the base portion 5 supports both (refer to FIGS. 3 and 4). Thus, the heat exchanger of at least one of the radiator 32 and the oil cooler 33 can be supported by the base portion 5 in which leg portions 52 described below are erected on the swivel frame 402. Therefore, at least one of the heat exchangers 32 and 33 described above can be stably disposed together with the fan 31. However, this example does not exclude a configuration in which the base portion 5 does not support both the radiator 32 and the oil cooler 33. For example, the base portion 5 may support only the fan 31.

### 1-5-1. Configuration Example of Base Portion 5

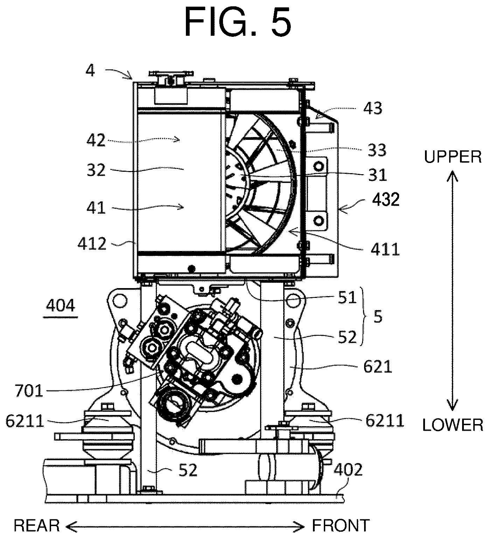

Next, a configuration example of the base portion 5 will be described with reference to FIGS. 4 and 5. FIG. 4 is a perspective view illustrating an arrangement example of the fan 31, the base portion 5, the electric motor 621, the hydraulic pump 701, and the like with respect to the swivel frame 402. FIG. 5 is a front view illustrating an arrangement example of the leg portions 52 of the base portion 5 and the anti-vibration support members 6211 of the electric motor 621 as viewed from the right side.

As illustrated in FIG. 4, the base portion 5 includes a holding plate portion 51 and the plurality of leg portions 52.

The holding plate portion 51 has a plate shape extending in a direction intersecting (for example, orthogonal to) the up-down direction, and holds the fan 31. For example, the fan 31 is fixed onto the holding plate portion 51. Furthermore, in this embodiment, both the radiator 32 and the oil cooler 33 are fixed onto the holding plate portion 51. However, this example does not exclude a configuration in which at least one of the radiator 32 and the oil cooler 33 is not fixed onto the holding plate portion 51.

The plurality of leg portions 52 are arranged to stand on the swivel frame 402 to support the holding plate portion 51. The number of the leg portions 52 is three in this embodiment, but is not limited to this example, and may be a plurality other than three. This example does not exclude a configuration in which the number of leg portions 52 is one.

With respect to the arrangement of the plurality of leg portions 52, the hydraulic pump 701 is preferably disposed between some of the leg portions 52 and the others of the leg portions 52 in the front-rear direction. The leg portions 52 do not come into contact with the hydraulic pump 701. For example, in FIG. 4, specifically, the two leg portions 52 are disposed in front of the hydraulic pump 701, and the single leg portion 52 is disposed behind the hydraulic pump 701. Thus, the hydraulic pump 701 is disposed between some of the one leg portions 52 and the others of the leg portions 52 in the front-rear direction.

Thus, a space between the leg portions 52 arranged in the front-rear direction can be effectively utilized. Since the leg portions 52 can be arranged close to the hydraulic pump 701, a size of the base portion 5 in the front-rear direction can be reduced. Therefore, the base portion 5 can be compactly configured. However, this example does not exclude a configuration in which all the leg portions 52 are arranged only in front of or behind the hydraulic pump 701.

The leg portions 52 are preferably located outside the electric motor 621 in a plan view from above. For example, each of the leg portions 52 does not come into contact with the electric motor 621 and is not erected from the electric motor 621. Thus, the leg portions 52 of the base portion 5 can be arranged away from the electric motor 621, and thus vibration of the hydraulic pump 701 via the electric motor 621, vibration of the electric motor 621 itself, and the like are less likely to be transmitted to the base portion 5. Therefore, the hydraulic excavator 100 can suppress or prevent the vibration during the operation from affecting the fan 31.

Preferably, as illustrated in FIG. 4, the plurality of leg portions 52 are arranged on the right side of the electric motor 621 in a plan view from above. The plurality of leg portions 52 are collected on the right side of the electric motor 621, and thus can be compactly arranged.

The leg portions 52 are preferably arranged on both sides of a connection portion 6210 between the electric motor 621 and the hydraulic pump 701 in the front-rear direction. An output shaft of the electric motor 621 is connected to the hydraulic pump 701 at the connection portion 6210. Therefore, an outer diameter (that is, a size in the front-rear direction) of the connection portion 6210 is smaller than (sizes in the front-rear direction of) the electric motor 621 and the hydraulic pump 701. Therefore, the leg portions 52 on both sides of the connection portion 6210 in the front-rear direction can be arranged close to each other, and the interval therebetween can be reduced. Thus, the plurality of leg portions 52 can be compactly arranged. However, this example does not exclude a configuration in which the leg portions 52 are arranged on only one side of the connection portion 6210 in the front-rear direction.

Preferably, as illustrated in FIG. 5, front end portions of the individual leg portions 52 are disposed on the front side of a rear end portion of the electric motor 621. Furthermore, rear end portions of the individual leg portions 52 are disposed on the rear side of a front end portion of the electric motor 621. That is, when viewed in the left-right direction, at least portions of the individual leg portions 52 may overlap with the electric motor 621 in the left-right direction. Thus, an arrangement interval between the leg portions 52 on both sides of the hydraulic pump 701 in the front-rear direction can be reduced.

Thus, the plurality of leg portions 52 can be compactly arranged. However, this example does not exclude a configuration in which the front end portion of at least one of the leg portions 52 is disposed on the rear side of the rear end portion of the electric motor 621, and does not exclude a configuration in which the rear end portion of the at least one of the leg portions 52 is disposed on the front side of the front end portion of the electric motor 621.

Preferably, as illustrated in FIG. 5, the front end portions of the individual leg portions 52 are arranged on the front side of a rear end portion of one of the anti-vibration support members 6211 disposed on the rear side of the electric motor 621. Furthermore, the rear end portions of the individual leg portions 52 are disposed on the rear side of the front end portion of one of the anti-vibration support members 6211 disposed on the front side of the electric motor 621. That is, when viewed in the left-right direction, at least portions of the leg portions 52 disposed on the front side of the hydraulic pump 701 may overlap with the anti-vibration support member 6211 disposed on the front side of the electric motor 621 in the left-right direction or may be disposed on the rear side of the anti-vibration support member 6211. Furthermore, at least a portion of the leg portion 52 disposed on the rear side of the hydraulic pump 701 may overlap with the anti-vibration support member 6211 disposed on the rear side of the electric motor 621 in the left-right direction or may be in front of the anti-vibration support member 111. Thus, the plurality of leg portions 52 can be compactly arranged. However, this example does not exclude a configuration in which the front end portion of at least one of the leg portions 52 is disposed on the rear side of the rear end portions of the anti-vibration support members 6211 disposed on the rear side of the electric motor 621, and does not exclude a configuration in which the rear end portion of at least one of the leg portions 52 is disposed on the front side of the front end portion of the anti-vibration support member 6211 disposed on the front side of the electric motor 621.

### 1-5-2. Arrangement of Radiator 32

As illustrated in FIG. 3, the radiator 32 is disposed on the right side (i.e., the ventilation portion 2 side) of the fan 31. That is, the radiator 32 is disposed on the upstream of the fan 31 in a flow direction of the outside air sucked from the ventilation portion 2 by rotation of the fan 31. Furthermore, the radiator 32 covers one side portion (for example, a rear side portion) of the fan 31 when viewed in the left-right direction.

For example, in this embodiment, on the upstream of the outside air with respect to the fan 31, a rear portion of the fan 31 directly faces the radiator 32 in the left-right direction. A front portion of the fan 31 directly faces the ventilation portion 2 in the left-right direction. Note that the "rear portion" of the fan 31 is an example of a "first portion (of the fan)" of the present invention. The "front portion" of the fan 31 is an example of a "second portion (of the fan)" of the present invention. In other words, the radiator 32 faces a portion of the fan 31 on the rear side in the left-right direction, but does not face at least a portion of a front portion of the fan 31 in the left-right direction. With the above-described arrangement of the radiator 32, only a part of the outside air taken in from the ventilation portion 2 can be used for heat exchange in the radiator 32.

### 1-5-3. Arrangement of Oil Cooler 33

As illustrated in FIG. 3, the oil cooler 33 is disposed on the left side of the fan 31 (that is, on a side opposite to the ventilation portion 2). That is, the oil cooler 33 is disposed on the downstream of the fan 31 in the flow direction of the outside air sucked from the ventilation portion 2. The oil cooler 33 is covered with the other side portion (for example, the front side portion) of the fan 31 when viewed in the left-right direction.

The oil cooler 33 is disposed between a portion (front side portion) of the fan 31 that directly faces the ventilation portion 2 and an inflow port (third opening portion 431 described below) of the outside air in a third flow passage portion 43 described below of the duct 4. For example, in this embodiment, on the downstream of the outside air with respect to the fan 31, the front portion of the fan 31 directly faces the oil cooler 33 in the left-right direction. The rear portion of the fan 31 directly faces a first opening portion 421 of a second flow passage portion 42 to be described below in the left-right direction. In other words, the oil cooler 33 faces a portion of the fan 31 on the front side in the left-right direction, but does not face at least a portion of the rear portion of the fan 31 in the left-right direction. With the above-described arrangement of the oil cooler 33, the other part of the outside air taken in from the ventilation portion 2 can be used for heat exchange in the oil cooler 33.

1-5-4. Arrangement of Fan 31, Radiator 32, and Oil Cooler 33

The above-described arrangement of the radiator 32 and the oil cooler 33 with respect to the fan 31 enables the hydraulic excavator 100 to divide the outside air taken into the engine room 404 into two air streams by rotation of the single fan 31.

The one airflow hits the radiator 32 and then flows into the second flow passage portion 42, which will be described below, of the duct 4 via a portion on the rear side of the fan 31. Therefore, the radiator 32 can cool the refrigerant to be supplied to the refrigerant cooling device 610 by heat exchange with the one airflow described above.

The other airflow hits the oil cooler 33 via a portion on the front side of the fan 31 and then flows into the third flow passage portion 43, which will be described below, of the duct 4. Therefore, the oil cooler 33 can cool the hydraulic oil circulating in the oil passage via the hydraulic pump 701, the hydraulic actuator 703 (refer to FIG. 2), and the like by heat exchange with the other airflow described above.

Thus, in this embodiment, the outside air taken in by the ventilation portion 2 individually cools the radiator 32 and the oil cooler 33, and flows through the different flow passages (that is, the second flow passage portion 42 and the third flow passage portion 43). Thus, it is possible to suppress or prevent the above-described one airflow passing through the radiator 32 out of the outside air taken in from the ventilation portion 2 from hitting the oil cooler 33. Therefore, it is possible to suppress or prevent the airflow whose temperature has been increased by the heat exchange in the radiator 32 from hitting the oil cooler 33. The other airflow hits the oil cooler 33 without passing through the radiator 32. Therefore, the airflow having a temperature similar to that of the outside air can be applied to the oil cooler 33. Therefore, the oil cooler 33 can more effectively cool the hydraulic oil, that is, can further lower the temperature of the hydraulic oil by heat exchange with the above-described airflow. The cooling structure of the radiator 32 and the oil cooler 33 can be achieved with a more compact layout suitable for the small hydraulic excavator 100 as compared with a configuration in which fans for cooling are individually arranged in the radiator 32 and the oil cooler 33.

### 1-6. Duct 4

Next, a configuration example of the duct 4 will be described. As illustrated in FIG. 3, the duct 4 of the hydraulic excavator 100 has the first flow passage portion 41, the second flow passage portion 42, and the third flow passage portion 43.

The outside air taken in from the ventilation portion 2 and flowing toward the fan 31 flows in the first flow passage portion 41. The one end 411 of the first flow passage portion 41 is connected to the ventilation portion 2 and is connected to the outside of the hydraulic excavator 100 (particularly, the engine room 404). In the other end of the first flow passage portion 41, the fan 31 is disposed.

In this embodiment, the duct 4 further includes a cover portion 412. The cover portion 412 covers an upper surface of the holding plate portion 51 of the base portion 5 and constitutes the first flow passage portion 41 together with the holding plate portion 51. That is, the holding plate portion 51 serves as a portion (bottom portion) of the first flow passage portion 41. However, the present invention is not limited to this example, and the holding plate portion 51 may not be a portion of the first flow passage portion 41. For example, the first flow passage portion 41 may be disposed on the holding plate portion 51. In other words, at least the first flow passage portion 41 incorporating the fan 31 may be supported by the base portion 5.

Furthermore, a flow passage portion of the duct 4 on the left side of the fan 31 (a side opposite to the ventilation portion 2) is divided by a partition plate 44. Thus, two flow passage portions are arranged in the front-rear direction. The second flow passage portion 42 is one of the two flow passage portions on the rear side, and an airflow that has passed through a portion on the rear side of the fan 31 flows through the second flow passage portion 42. The third flow passage portion 43 is the other of the two flow passage portions on the front side, and an airflow that has passed through a portion on the front side of the fan 31 flows through the third flow passage portion 43.

The second flow passage portion 42 guides the outside air (airflow) having a relatively low temperature, which has undergone heat exchange in the radiator 32, to the air cooling device 620, such as the electric motor 621. The second flow passage portion 42 has the first opening portion 421 and the second opening portion 422. The first opening portion 421 is an end portion of the second flow passage portion 42 on the upstream of the outside air and opens to the right. The first opening portion 421 is connected to the other end side of the first flow passage portion 41 and faces a portion of the fan 31 on the rear side in the left-right direction. The second opening portion 422 is an end portion of the second flow passage portion 42 on the downstream of the outside air. The second opening portion 422 is an example of a "downstream opening portion" of the present invention, is provided on the downstream of the fan 31 in the flow of the outside air, and is opened to face an upper portion of the electric motor 621. Note that an upper surface of the second flow passage portion 42 is inclined downward toward the left side. Therefore, a portion of the second flow passage portion 42 on the left side is bent downward. As a result, the second opening portion 422 opens downward and faces the electric motor 621 in the up-down direction. Thus, the electric motor 621 can be cooled with a compact layout. A shape of the second flow passage portion 42 is not limited to the shape described above.

Thus, a part of the outside air taken in from the ventilation portion 2 hits the radiator 32 that cools a refrigerant, such as water. The outside air becomes an airflow having a relatively low temperature by heat exchange with the radiator 32, and flows to the first opening portion 421 of the second flow passage portion 42 via the rear side portion of the fan 31. That is, the outside air deviates from the oil cooler 33 (that is, passes through the outside of the oil cooler 33) and flows into the second flow passage portion 42.

In this embodiment, a front portion of the inverter 623 is disposed on the side surface of the second flow passage portion 42 on the rear side. Thus, the inverter 623 can be efficiently air-cooled by the airflow having a relatively low temperature flowing inside the second flow passage portion 42.

In this embodiment, the second opening portion 422 faces the electric motor 621 in the up-down direction. Therefore, the airflow having a relatively low temperature flowing inside the second flow passage portion 42 is delivered from the second opening portion 422 toward the electric motor 621 and directly hits the electric motor 621. Thus, the cooling efficiency of the electric motor 621 is improved.

Furthermore, in this embodiment, some of the air cooling devices 620, such as the charger 622, are disposed around the second flow passage portion 42. The second opening portion 422 opens toward a space in which the electric device 600 is disposed, that is, is connected to the space. Therefore, the airflow having a relatively low temperature discharged from the second opening portion 422 can air-cool not only the electric motor 621 but also the other air cooling devices 620 (the charger 622, the rear portion of the inverters 623, the PDU 624, the junction box 625, the DC-DC converter 626, the system controller 627, and the like) and the refrigerant cooling device 610, such as the battery unit 611. Therefore, the cooling efficiency of the electric device 600 is further improved.

Furthermore, in this embodiment, the refrigerant cooling device 610 (particularly, the battery unit 611) is disposed in the vicinity of the second flow passage portion 42 (particularly, the second opening portion 422). Thus, in the hydraulic excavator 100, the refrigerant cooling device 610 and the plurality of air cooling devices 620 can be compactly arranged while being cooled. Therefore, the hydraulic excavator 100 can efficiently cool the electric device 600 while effectively utilizing the limited space in the engine room 404.

The third flow passage portion 43 is an example of a "flow passage portion" of the present invention, and guides the relatively high-temperature outside air (airflow) that is heat-exchanged by the oil cooler 33 to the exhaust port 11 formed in the hood 1. The third flow passage portion 43 has the third opening portion 431 and the fourth opening portion 432. The third opening portion 431 is an end portion of the third flow passage portion 43 on the upstream of the outside air, is aligned in the front-rear direction with the first opening portion 421 of the second flow passage portion 42 with the partition plate 44 interposed therebetween, and is open to the right. The third opening portion 431 is connected to the other end side of the first flow passage portion 41 and faces a portion of the fan 31 on the front side in the left-right direction. The fourth opening portion 432 is an end portion of the third flow passage portion 43 on the downstream of the outside air. The rear side surface of the third flow passage portion 43 (that is, the partition plate 44) is inclined forward toward the left side. Therefore, a portion of the third flow passage portion 43 on the left side is bent forward. As a result, the fourth opening portion 432 is opened forward. However, a shape of the third flow passage portion 43 is not limited to the shape described above.

Furthermore, the oil cooler 33 is disposed in the third flow passage portion 43. Note that, in this embodiment, as illustrated in FIG. 3, at least a portion of the oil cooler 33 is disposed in the third opening portion 431 (i.e., the upstream end portion of the third flow passage portion 43) and covers the third opening portion 431.

Thus, a remaining portion of the outside air taken in from the ventilation portion 2 deviates from the radiator 32 (that is, passes through the outer side of the radiator 32), passes through the ventilation portion 2 and the front side of the fan 31, and hits the oil cooler 33 that cools the hydraulic oil. The outside air becomes a relatively high-temperature airflow by heat exchange in the oil cooler 33, flows inside the third flow passage portion 43, and is discharged forward from the fourth opening portion 432.

The airflow discharged forward from the fourth opening portion 432 is discharged to the outside from, for example, the exhaust port 11 provided in a portion on the front side of the hood 1 without circulating in the engine room 404. Thus, a rise in an internal temperature of the engine room 404 can be suppressed, and a relatively high-temperature airflow can be suppressed or prevented from hitting the electric device 600.

However, the present invention is not limited to the above-described example, and the oil cooler 33 may be disposed in a portion away from the third opening portion 431 inside the third flow passage portion 43. Alternatively, the oil cooler 33 may cover either the third opening portion 431 or the fourth opening portion 432 outside the third flow passage portion 43, or may be disposed near either the third opening portion 431 or the fourth opening portion 432 outside the third flow passage portion 43.

### 2. Remarks

The embodiment of the present invention has been described above. It should be understood by those skilled in the art that the above-described embodiment is merely an example and various modifications can be made to a combination of components and processes thereof and are within the scope of the present invention.

For example, in the above-described embodiment, the hydraulic excavator 100, which is a construction machine, has been described as an example of the "work machine" of the present invention. However, this example does not exclude a configuration in which the present invention is applied to a work machine other than the hydraulic excavator 100. For example, the "work machine" of the present invention may be another construction machine, such as a wheel loader, or may be an agricultural machine, such as a combine harvester or a tractor.

### 3. Overview

The above-described embodiment will be collectively described below.

For example, the work machine 100 disclosed in this specification is configured to comprise:
the base plate 402 extending perpendicularly to the up-down direction;
the electric motor 621 supported on the base plate 402;
the hydraulic pump 701 connected to a first side (for example, the right side) of the electric motor 621 in a first direction perpendicular to the up-down direction;
the fan 31 disposed above the hydraulic pump 701; and
the base portion 5 that is disposed on the base plate 402 across the hydraulic pump 701 and supports the fan 31 (first configuration).

The work machine 100 according to the first configuration may be configured such that
the base portion 5 includes
   the holding plate portion 51 that holds the fan 31, and
   the plurality of leg portions 52 that are disposed to stand on the base plate 402 and support the holding plate portion 51, and
the hydraulic pump 701 is disposed between some of the leg portions 52 and the others of the leg portions 52 in the second direction perpendicular to the up-down direction and the first direction (second configuration).

The work machine 100 according to the second configuration may be configured such that
in a plan view as viewed from above, the individual leg portions 52 are disposed outside the electric motor 621 (third configuration).

The work machine 100 according to the second or third configuration may be configured such that
in a plan view as viewed from above, the individual leg portions 52 are disposed on the first side (for example, the right side) in the first direction with respect to the electric motor 621 (fourth configuration).

The work machine 100 according to any one of the second to fourth configurations may be configured such that
the individual leg portions 52 are disposed on both sides of the connection portion 6210 between the electric motor 621 and the hydraulic pump 701 in the second direction (for example, the front-rear direction) (fifth configuration).

The work machine 100 according to any one of the second to fifth configurations may be configured such that
end portions (for example, front end portions) of the leg portions 52 on the first side in the second direction are disposed on the first side relative to the end portion of the electric motor 621 on a second side (for example, rear end portion) in the second direction, and
the end portions (for example, the rear side) of the leg portions 52 on the second side in the second direction are disposed on the second side relative to the end portion of the electric motor 621 on the first side in the second direction (sixth configuration).

The work machine 100 according to any one of the second to sixth configurations may be configured to further comprise:
the anti-vibration support members 6211 that are disposed on both sides of the electric motor 621 in the second direction on the base plate 402 and support the electric motor 621, wherein
the plurality of leg portions 52 are disposed on the second side (for example, the left side) of one of the anti-vibration support members 6211 disposed on the first side (for example, the right side) in the second direction and on the first side (for example, the right side) of the other of the anti-vibration support members 6211 on the second side (for example, the left side) in the second direction (seventh configuration).

The work machine 100 according to any one of the first to seventh configurations may be configured to further comprise:
the battery unit 611 that is disposed on the second side (for example, the left side) in the first direction with respect to the electric motor 621 on the base plate 402 (eighth configuration).

The work machine 100 according to any one the first to eighth configurations may be configured to further comprise:
the hood 1 that surrounds, together with the base plate 402, the engine room 404 that houses the electric motor 621, the hydraulic pump 701, the base portion 5, and the fan 31;
the ventilation portion 2 that is formed in the hood 1 and enables ventilation between the inside and the outside of the engine room 404; and
the duct 4 that incorporates the fan 31 and allows outside air taken in from the ventilation portion 2 to flow, wherein
the duct 4 includes
   the upstream opening portion 411 that is formed on an upstream of the fan 31 in flow of the outside air and opens to face the ventilation portion 2, and
   the downstream opening portion 422 that is formed on a downstream of the fan 31 in the flow of the outside air and opens toward an upper portion of the electric motor 621 (ninth configuration).

The work machine 100 according to the ninth configuration, further comprises:
the first heat exchanger 32 that is disposed between the ventilation portion 2 and the fan 31 in the duct 4 and cools, with the outside air, a refrigerant for the electric devices 600 in the engine room 404, wherein
a first portion of the fan 31 directly faces the first heat exchanger 32, and
a second portion of the fan 31 directly faces the ventilation portion 2 (10th configuration).

The work machine 100 according to the ninth or tenth configuration further comprises:
the second heat exchanger 33 that is disposed on a downstream of the outside air with respect to the fan 31 and cools, with the outside air, hydraulic oil circulated through an oil passage by the hydraulic pump 701; and
the flow passage portion 43 that guides the outside air heat-exchanged by the second heat exchanger 33 to the exhaust port 11 formed in the hood 1, wherein
the second heat exchanger 33 is disposed between a portion of the fan 31 that directly faces the ventilation portion 2 and the inflow port 431 of the outside air in the flow passage portion 43 (11th configuration).

The work machine 100 according to any one of the ninth to 11th configurations further comprises:
the first heat exchanger 32 that is disposed in the duct 4 and cools, with a part of the outside air, a refrigerant for the electric devices 600 in the engine room 404; and
the second heat exchanger 33 that is disposed in the duct 4 and cools, with the outside air, hydraulic oil circulated through the oil passage by the hydraulic pump 701, wherein
the base portion 5 further supports at least one of the first heat exchanger 32 and the second heat exchanger 33 (12th configuration).

### INDUSTRIAL APPLICABILITY

The present invention is applicable to work machines, such as construction machines and agricultural machines.

### REFERENCE SIGNS LIST

100 Hydraulic excavator (work machine)
200 Lower traveling body
201 Crawler
202 Traveling motor
300 Work machine
301 Boom
302 Arm
303 Bucket
304 Boom cylinder
305 Arm cylinder
306 Bucket cylinder
400 Upper swiveling body
401 Operation section
4011 Driver's seat
4012 Lever
4013 Step
4014, 4015 Side wall portion
402 Swivel frame (base plate)
403 Swivel motor
404 Engine room
500 Commercial power source
501 Power supply cable
600 Electric device
610 Refrigerant cooling device
611 Battery unit
620 Air cooling device
621 Electric motor
6210 Connection portion
6211 Anti-vibration support member
622 Charger
623 Inverter
624 PDU
625 Junction box
626 DC-DC converter
627 System controller
628 Lead battery
701 Hydraulic pump
702 Control valve
703 Hydraulic actuator
704 Hydraulic hose
705 Reservoir
1 Hood
11 Exhaust port
2 Ventilation portion
31 Fan
32 Radiator (first heat exchanger)
33 Oil cooler (second heat exchanger)
4 Duct
41 First flow passage portion
411 One end
412 Cover portion
42 Second flow passage portion
421 First opening portion
422 Second opening portion
43 Third flow passage portion (flow passage portion)
431 Third opening portion
432 Fourth opening portion
44 Partition plate
5 Base portion
51 Holding plate portion
52 Leg portion
CA Rotation axis

## Claims

1. A work machine comprising:
a base plate extending perpendicular to an up-down direction;
an electric motor supported on the base plate;
a hydraulic pump connected to a first side of the electric motor in a first direction perpendicular to the up-down direction;
a fan disposed above the hydraulic pump; and
a base portion that is disposed on the base plate across the hydraulic pump and supports the fan.

2. The work machine according to claim 1, wherein
the base portion includes
a holding plate portion that holds the fan, and
a plurality of leg portions that are disposed to stand on the base plate and support the holding plate portion, wherein
the hydraulic pump is disposed between some of the leg portions and the others of the leg portions in a second direction perpendicular to the up-down direction and the first direction.

3. The work machine according to claim 2, wherein, in a plan view as viewed from above, each of the leg portions is disposed outside the electric motor.

4. The work machine according to claim 2, wherein, in a plan view as viewed from above, the plurality of leg portions are disposed on the first side in the first direction with respect to the electric motor.

5. The work machine according to claim 2, wherein the leg portions are disposed on both sides of a connection portion between the electric motor and the hydraulic pump in the second direction.

6. The work machine according to claim 2, wherein
end portions of the leg portions on a first side in the second direction are disposed on the first side relative to an end portion of the electric motor on a second side in the second direction, and
end portions of the leg portions on the second side in the second direction are disposed on the second side relative to an end portion of the electric motor on the first side in the second direction.

7. The work machine according to claim 2, further comprising:
anti-vibration support members that are disposed on both sides of the electric motor in the second direction on the base plate and support the electric motor, wherein
the plurality of leg portions are disposed on the second side of one of the anti-vibration support members disposed on the first side in the second direction and on the first side of the other of the anti-vibration support members on the second side in the second direction.

8. The work machine according to claim 1, further comprising:
a battery unit that is disposed on the base plate on the second side of the electric motor in the first direction.

9. The work machine according to any one of claims 1 to 8, comprising:
a hood that surrounds, together with the base plate, an engine room that houses the electric motor, the hydraulic pump, the base portion, and the fan;
a ventilation portion that is formed in the hood and enables ventilation between the inside and the outside of the engine room, and
a duct that incorporates the fan and allows outside air taken in from the ventilation portion to flow, wherein
the duct includes
an upstream opening portion that is formed on an upstream of the fan in flow of the outside air and opens to face the ventilation portion, and
a downstream opening portion that is formed on a downstream of the fan in the flow of the outside air and opens toward an upper portion of the electric motor.

10. The work machine according to claim 9, further comprising:
a first heat exchanger that is disposed between the ventilation portion and the fan in the duct and cools, with the outside air, a refrigerant for electric devices in the engine room, wherein
a first portion of the fan directly faces the first heat exchanger, and
a second portion of the fan directly faces the ventilation portion.

11. The work machine according to claim 9, further comprising:
a second heat exchanger that is disposed on a downstream of the outside air with respect to the fan and cools, with the outside air, hydraulic oil circulated through an oil passage by the hydraulic pump; and
a flow passage portion that guides the outside air heat-exchanged by the second heat exchanger to an exhaust port formed in the hood, wherein
the second heat exchanger is disposed between a portion of the fan that directly faces the ventilation portion and an inflow port of the outside air in the flow passage portion.

12. The work machine according to claim 9, further comprising:
a first heat exchanger that is disposed in the duct and cools, with a part of the outside air, a refrigerant for electric devices in the engine room; and
a second heat exchanger that is disposed in the duct and cools, with the outside air, hydraulic oil circulated through an oil passage by the hydraulic pump, wherein
the base portion further supports at least one of the first heat exchanger and the second heat exchanger.
